# EUROPÄISCHE PATENTSCHRIFT

(11) **EP 2 265 810 B1**
(45) Veröffentlichungstag und Bekanntmachung des Hinweises auf die Patenterteilung: **26.10.2011**
(21) Anmeldenummer: 09735551.5
(22) Anmeldetag: 15.04.2009
(51) Int. Cl.: F02M 37/22

(54) **KRAFTSTOFFFILTERSYSTEM, INSBESONDERE FÜR DIESELMOTOREN**
FUEL FILTER SYSTEM, ESPECIALLY FOR DIESEL ENGINES
SYSTÈME DE FILTRE À CARBURANT, NOTAMMENT POUR DES MOTEURS DIESEL

(30) Priorität: 22.04.2008 DE 102008020233
(43) Veröffentlichungstag der Anmeldung: 29.12.2010
(73) Patentinhaber: Hydac Filtertechnik GmbH, 66273 Sulzbach/Saar (DE)
(72) Erfinder: EBERLE, Richard, 66123 Saarbrücken (DE)
(74) Vertreter: Bartels, Martin Erich Arthur
(86) Internationale Anmeldenummer: PCT/EP2009/002747
(87) Internationale Veröffentlichungsnummer: WO 2009/129956

(56) Entgegenhaltungen:
- EP-A- 1 435 452
- EP-A- 1 726 818
- WO-A-2004/061289
- DE-A1- 10 160 497
- DE-A1-102006 046 752

## Beschreibung

Die Erfindung betrifft ein Kraftstofffiltersystem, insbesondere für Dieselmotoren, mit einem Filtergehäuse mit Kraftstoffeinlass und Kraftstoffauslass und einem zwischen Einlass und Auslass befindlichen, vom Kraftstoff durchströmbaren, wasserabscheidenden Filtermedium, wobei das Filtergehäuse für vom Filtermedium abgeschiedenes Wasser einen Sammelraum aufweist, aus dem Wasser über eine steuerbare Abgabeeinrichtung abführbar ist.

Um das Einspritzsystem zu schützen, sind Kraftstofffiltersysteme üblicherweise so ausgelegt, dass nicht nur Verunreinigungen wie Schwebepartikel, Staub und dergleichen abgesondert werden, sondern dass auch Wasser abgeschieden und entfernt wird. Da das abgeschiedene Wasser noch mit Dieselöl verunreinigt sein kann, darf es nicht unmittelbar in die Umwelt abgelassen werden. Es können sich nämlich gelöste Dieselanteile oder Mikrotropfen, die in dem im Sammelraum angesammelten Sumpf nicht durch den Dichteunterschied zwischen Wasser und Dieselöl getrennt worden sind, im Wasser befinden. Demzufolge ist es Stand der Technik, Maßnahmen zur Reinigung des abgeschiedenen Wasser vor dessen Austritt zur Umwelt vorzusehen.

Ein Kraftstofffiltersystem der eingangs genannten Art ist aus EP 1 435 452 A2 bekannt. Der bekannte Kraftstofffilter weist einen unteren Gehäuseteil und einen oberen Gehäuseteil auf, wobei das untere Gehäuseteil becherartig und das obere Gehäuseteil als Deckel ausgebildet ist und beide Gehäuseteile lösbar miteinander verbunden sind. Weiter weist der Kraftstofffilter mindestens ein insbesondere austauschbares Filterelement und verschiedene Außenanschlüsse, von denen mindestens einer ein Kraftstoffeinlass und mindestens einer ein Kraftstoffauslass ist, auf. Zum Sammeln von bei der Filterung aus dem Kraftstoff abgeschiedenem Wasser ist eine Wasserkammer und ein Wasserablass zum Abführen des in der Wasserkammer gesammelten Wassers aus dem unteren Gehäuseteil vorgesehen. Weiter sind am unteren Gehäuseteil alle weiteren Außenanschlüsse angeordnet. Das Wasser sammelt sich aufgrund seiner gegenüber dem Kraftstoff höheren spezifischen Dichte unterhalb des Filterelements in der Wasserkammer. Sobald der Wasserpegel in der Wasserkammer die Spitze eines Wassersensors erreicht hat, gibt der Wassersensor ein Signal ab, um anzuzeigen, dass der Kraftstofffilter gewartet bzw. die Wasserkammer entleert werden muss.

Aus EP 1 581 736 B1 ist diesbezüglich ein weiteres Kraftstofffiltersystem bekannt. Diese bekannte Lösung sieht vor, dass abgeschiedenes Wasser, das noch mit Stoffen belastet ist, die nicht umweltverträglich sind, nicht unmittelbar in flüssiger Phase an die Umwelt abgelassen wird, sondern einer Verdampfereinrichtung zugeführt wird, aus der der gebildete Abdampf stromabwärts der Abgabeeinrichtung an die Umgebung abgegeben wird.

Eine demgegenüber andere Lösung, vergl. EP 1 726 818 A2, bei der das abgeschiedene Wasser, ohne dass ein Verdampfungs- oder Verdunstungsvorgang stattfindet, in flüssiger Phase an die Umgebung abgelassen wird, sieht vor dem Austritt eine für Wassermoleküle durchlässige Membran, beispielsweise in Form einer Keramikmembran vor, die die nicht umweltverträglichen Stoffe zurückhält. Abgesehen davon, dass derartige Membrane nach begrenzten Standzeiten auszuwechseln sind, benötigen sie für das Durchströmen einen Druckaufbau.

Die Erfindung liegt im Hinblick auf den Stand der Technik die Aufgabe zugrunde, ein Kraftstofffiltersystem der eingangs genannten Art zur Verfügung zu stellen, das sich durch eine erhöhte Betriebssicherheit und besondere Effizienz der Reinigung auszeichnet.

Erfindungsgemäß ist diese Aufgabe durch ein Kraftstofffiltersystem gelöst, das die Merkmale des Patentanspruches 1 in seiner Gesamtheit aufweist.

Dadurch, dass gemäß dem kennzeichnenden Teil des Anspruches 1 das Wasser über die steuerbare Abgabeeinrichtung einer Wasseraufnahme- und Verdampfereinrichtung zuführbar ist, aus deren Abdampfausgang die Bestandteile des Abdampfes an die Umgebung abgebbar sind, und dass die Wasseraufnahme- und Verdampfereinrichtung eine Ventilanordnung aufweist, mittels deren der Abdampfausgang der Verdampfereinrichtung verschließbar ist, wenn sich in der Verdampfereinrichtung eine unzulässige Menge an unverdampftem Wasser angesammelt hat, ist die Gefahr sicher vermieden, dass Fehlfunktionen des Systems zu einer Umweltgefährdung führen. Selbst bei einem Versagen der Steuerfunktion der Abgabeeinrichtung, beispielsweise dergestalt, dass ein Abgabeventil dauerhaft geöffnet bleibt oder eine am Sammelraum angeschlossene Abgabepumpe ununterbrochen in Betrieb bleibt, wodurch aus dem im Sammelraum angesammeltem Sumpf eine unzulässige Menge abgeschiedenen Wassers, das noch mit Schadstoffen belastet ist, und gegebenenfalls sogar oberhalb der Trennschicht im Sumpf befindliches Dieselöl, zur Verdampfereinrichtung gelangen sollte, ist durch Schließen des Abdampfausganges eine Umweltverschmutzung verhindert.

Bei vorteilhaften Ausführungsbeispielen weist die Wasseraufnahme- und Verdampfereinrichtung ein über die steuerbare Abgabeeinrichtung mit dem Sammelraum verbindbares Verdampfergehäuse auf, wobei die Ventilanordnung ein Schwimmerventil aufweist, das in Abhängigkeit von einer unzulässigen Füllhöhe von im Verdampfergehäuse angesammelten Wassers den Abdampfausgang schließt. Derartige Ausführungsbeispiele zeichnen sich durch eine besonders einfache und betriebssichere Bauweise aus. Beispielsweise kann das Schwimmerventil als Kugelventil ausgebildet sein, bei dem als Schließkugel eine Schwimmerkugel vorgesehen ist, die beim Aufschwimmen unmittelbar an einer am Abdampfausgang vorgesehenen Ventilsitzfläche schließend anliegt.

Hierbei kann die Anordnung mit Vorteil so getroffen sein, dass das Filtergehäuse eine zentrale Hochachse definiert und dass das Verdampfergehäuse durch einen rohrförmigen, zentralen und zur Achse koaxialen Innenkörper des Filtergehäuses gebildet ist. Bei einer derartigen koaxialen Bauweise bildet das gesamte System aus Kraftstofffilter, Wasserabscheider, Sammelraum und Wasseraufnahme- und Verdampfereinrichtung einen einheitlichen Baukörper, beispielsweise mit einer im Ganzen kreiszylinderförmigen Form eines Gesamtgehäuses.

Vorzugsweise grenzt hierbei die Außenseite des Innenkörpers an die innere Reinseite des konzentrisch angeordneten Filtermediums an.

Bei einer besonders vorteilhaften Ausgestaltung ist hierbei die Anordnung so getroffen, dass der Abdampfausgang stromaufwärts der Abgabeeinrichtung am oberen Ende des das Verdampfergehäuse bildenden Innenkörpers gelegen ist, so dass der im Verdampfergehäuse aufsteigende Abdampf aus dem Gesamtgehäuse unmittelbar an dessen oberem Ende austreten kann.

Da die Siedetemperatur von Dieselöl weit oberhalb deren des Wassers liegt, ist der Abdampf praktisch frei von Dieselöl, wenn die Siedetemperatur geeignet gewählt ist, beispielsweise unterhalb der Siedetemperatur von Wasser bleibt, so dass der Abdampf im wesentlichen ein aufsteigender Wassernebel oder -dunst ist. Es kann jedoch nicht ausgeschlossen werden, dass, selbst wenn der Verdampfungsvorgang geeignet durchgeführt wird, im Abdampf letzte Verunreinigungen verbleiben, beispielsweise Mikropartikel, die von dem gebildeten Dunst mitgeführt werden. Im Hinblick hierauf ist bei besonders bevorzugten Ausführungsbeispielen die Anordnung so getroffen, dass stromaufwärts des Abdampfausganges des Verdampfergehäuses eine Abdampffiltereinrichtung vorgesehen ist.

Da der durch den Siedevorgang weitestgehend vorgereinigte Abdampf praktisch frei von Dieselölbestandteilen ist, kann als Abdampf-Filtereinrichtung eine Aktivkohle-Filtereinrichtung vorgesehen sein. Da bei der Erfindung kein unmittelbares Hindurchleiten abgeschiedenen, noch durch Ölanteile belasteten Wassers durch den Aktivkohlefilter stattfindet, weil dieser der Verdampfereinrichtung nachgeschaltet ist, in der gewissermaßen ein Aggregatzustandswechsel zu gasförmig hin stattfindet, ist die Gefahr einer Sättigung der Aktivkohle und des damit verbundenen Verlustes an Reinigungswirkung vermieden.

Bei besonders vorteilhaften Ausführungsbeispielen ist die Wasserabgabe der Abgabeeinrichtung durch eine die Wasser-Füllhöhe im Sammelraum erkennende Wassersensoreinrichtung steuerbar. Die Ablassvorgänge lassen sich dadurch in automatischem Betrieb so gestalten, dass aus dem im Sammelraum angesammelten Sumpf, in dem durch den Dichteunterschied zwischen Dieselöl und Wasser bereits eine Schwerkrafttrennung (Schichtung) erfolgt, absatzweise jeweils der untere, schwerere Wasseranteil abgelassen wird.

Wenn die Kraftstoffpumpe des jeweils zugeordneten Verbrennungsmotors vor dem Kraftstoffeinlass des Filtergehäuses angeordnet ist, kann die Abgabeeinrichtung ein von der Wassersensoreinrichtung steuerbares Ablassventil aufweisen. Andererseits kann, wenn die Kraftstoffpumpe am Kraftstoffauslass des Filtergehäuses angeschlossen ist, anstelle des Ablassventils eine von der Wassersensoreinrichtung steuerbare Pumpe vorgesehen sein, die gegen den von der Kraftstoffpumpe im Filtergehäuse erzeugten Unterdruck das abzulassende Wasser der Wasseraufnahme- und Verdampfereinrichtung zuführt.

Um den Verdampfungsvorgang in gewünschter Weise ablaufen zu lassen, so dass ein Verdunstungsvorgang bei einer Temperatur stattfindet, die vorzugsweise geringfügig unterhalb der Siedetemperatur von Wasser liegt, ist bei vorteilhaften Ausführungsbeispielen im Verdampfergehäuse eine vorzugsweise steuerbare Einrichtung zur Wärmezufuhr vorhanden, beispielsweise in Form einer Heizeinrichtung oder eines Wärmetauschers für die Übertragung von Wärme aus dem Kühlsystem, dem Schmiersystem oder Abgassystem eines zugeordneten Verbrennungsmotors.

Nachstehend ist die Erfindung anhand von in der Zeichnung dargestellten Ausführungsbeispielen im Einzelnen erläutert. Es zeigen:
- Fig. 1 einen stark schematisch vereinfacht gezeichneten Längsschnitt eines Ausführungsbeispieles des erfindungsgemäßen Kraftstofffiltersystems, wobei während des Betriebes des Systems darin befindliche strömungsfähige Medien kenntlich gemacht sind, und
- Fig. 2 einen der Fig. 1 ähnlichen Längsschnitt eines zweiten Ausführungsbeispieles des erfindungsgemäßen Kraftstofffiltersystems;

Nachstehend ist die Erfindung anhand von Ausführungsbeispielen erläutert, bei denen das Kraftstofffiltersystem Teil des Versorgungssystems eines nicht dargestellten Dieselmotors mit Dieselöl ist. Es versteht sich, dass die Erfindung auch in Verbindung mit als Kraftstoffe dienenden anderen Kohlenwasserstoffverbindungen nutzbar ist, bei denen eine Wasserabscheidung vor der motorischen Verbrennung wünschenswert oder notwendig ist.

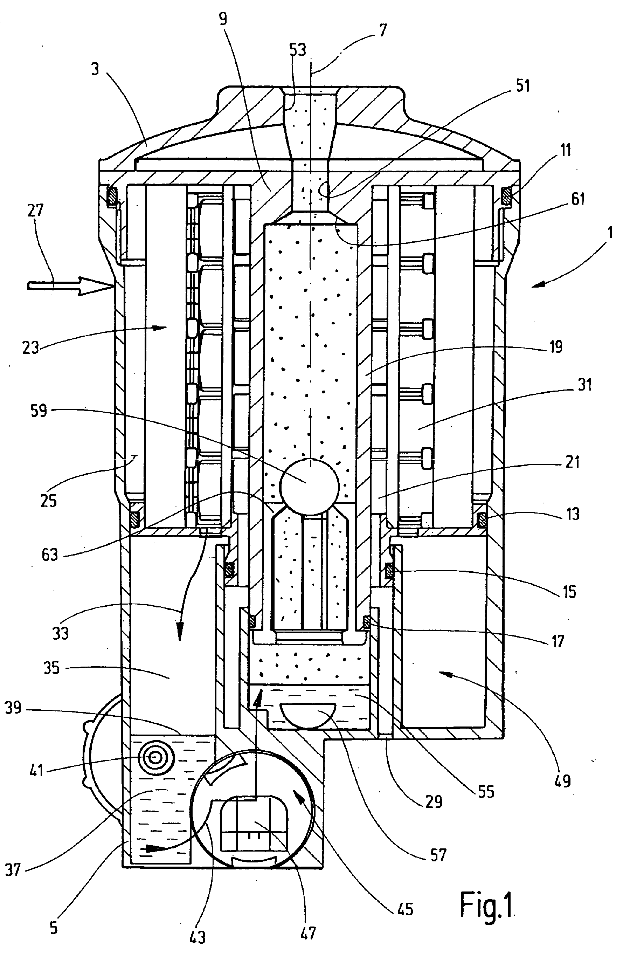

Fig. 1 zeigt ein erstes Ausführungsbeispiel mit einem als Ganzes mit 1 bezeichneten Filtergehäuse, das an der Oberseite durch einen abnehmbaren Verschlussdeckel 3 dicht abgeschlossen ist. Das Gehäuse 1 besitzt, von einem Bodenteil 5 abgesehen, eine im wesentlichen kreiszylinderförmige Gestalt mit einer zentralen Hochachse 7. Von der bei abgenommenem Deckel 3 offenen Oberseite des Gehäuses 1 her ist ein koaxialer Innenkörper 9 in das Gehäuse 1 eingesetzt, der gegenüber den Gehäusewänden über Dichtungsanordnungen 11, 13, 15 und 17 abgedichtet ist. Der Innenkörper 9 bildet mit seinem koaxialen Innenrohr 19 ein Verdampfergehäuse, worauf nachstehend näher eingegangen ist.

Die Außenseite des Innenrohres 19 grenzt an die Reinseite 21 einer konzentrischen, am Innenkörper 9 gelagerten Kraftstoff-Filtereinrichtung 23 an, zu deren Schmutzseite 25 über einen nicht dargestellten Kraftstoffeinlass, wie es lediglich durch Strömungspfeil 27 angedeutet ist, zugeführt wird. Nach Durchströmen der Filtereinrichtung 23 von außen nach innen gelangt das Dieselöl aus der Reinseite 21 zu einem bodenseitigen Kraftstoffauslass 29.

Die Filtereinrichtung 23 ist in bekannter Weise so aufgebaut, dass in einer Abscheidezone 31 eine Wasserabscheidung erfolgt. Wie mit Pfeil 33 angedeutet, gelangt abgeschiedenes Wasser zusammen mit Dieselöl in einen Sammelraum 35, der durch das an das Bodenteil 5 angrenzende unter Gehäuseabteil gebildet ist. Aufgrund des höheren spezifischen Gewichtes des Wassers gegenüber Dieselöl bildet sich im Betrieb in dem Sammelraum 35 ein bodenseitiger Sumpf 37 aus dem abgeschiedenen Wasser, wobei die obere Trennlinie gegenüber dem darüberliegenden, leichteren Dieselöl mit 39 bezeichnet ist. Die Pegelhöhe der Trennlinie 39 des Sumpfes 37 aus abgeschiedenem Wasser gegenüber dem darüberliegenden Dieselöl wird durch einen Wasserstandssensor 41 erkannt.

Wie mit Strömungspfeil 43 angedeutet, ist am Boden des Sumpfes 37 eine Abgabeeinrichtung 45 angeschlossen, deren Betrieb in Abhängigkeit von den Signalen des Wasserstandssensors 41 steuerbar ist. Beim vorliegenden Ausführungsbeispiel, bei dem die Kraftstoffpumpe stromabwärts des Kraftstoffauslasses 29 angeordnet ist und im Betrieb daher ein Unterdruck im Filtergehäuse 1 gegeben ist, weist die Abgabeeinrichtung 45 eine Pumpe 47 auf. Deren Betrieb ist mittels des Wasserstandssensors 41 so gesteuert, dass im Betrieb aus dem Sammelraum 35 soviel Wasser des Sumpfes 23 abgeführt wird, dass die Trennlinie 39 nicht bis zur Anschlussstelle an der Abgabeeinrichtung 45 absinkt, so dass die Pumpe 47 abgeschiedenes Wasser in eine als Ganzes mit 49 bezeichnete Wasseraufnahme- und Verdampfereinrichtung fördert.

Als Teil der Wasseraufnahme- und Verdampfereinrichtung 49 bildet das Innenrohr 19 des Innenkörpers 9 ein Verdampfergehäuse, das sich stromaufwärts der Abgabeeinrichtung 45 koaxial nach oben zu einem Abdampfausgang 51 erstreckt, an den sich ein Abdampfaustritt 53 im Deckelteil 3 anschließt.

Für eine gesteuerte Verdampfung des durch die Pumpe 47 in das Verdampfergehäuse 19 geforderten Wassers 55, ist am Grund des Verdampfergehäuses ein Element 57 für eine gesteuerte Wärmezufuhr vorhanden. Hierbei kann es sich um eine gesonderte Heizung oder einen Wärmetauscher für die Zufuhr von Motorwärme, Abgaswärme oder Kühlmittelwärme handeln. Mit besonderem Vorteil kann hier ein PTC-Element, d. h. ein Widerstandselement mit positivem Verlauf des Temperaturkoeffizienten, benutzt werden, wobei auf Regel- und Steuereinrichtungen oder Übertemperatursicherung verzichtet werden kann.

Aus dem durch die Pumpe 47 zugeführten, durch Schwerkraft-Schichttrennung im Sammelraum 35 vorgereinigten Wasser 55 wird durch Verdampfen ein Wasserdunst oder -nebel gebildet, der, wie in Fig. 1 angedeutet, im Innenrohr 19 aufsteigt und über den Abdampfausgang 51 des Innenrohres 19 und den Dampfaustritt 53 im Deckelteil 3 nach außen gelangt.

Wie bereits erwähnt, enthält die Wasseraufnahme- und Verdampfereinrichtung 49 eine Sicherheitseinrichtung in Form einer Ventilanordnung, die in Abhängigkeit von einer unzulässigen Menge von unverdampftem, angesammeltem Wasser 55 schließt. Beim vorliegenden Ausführungsbeispiel ist hierfür ein Schwimmerventil vorgesehen, das als Schließkörper eine Schwimmerkugel 49 aufweist, die mit einer Ventilsitzfläche 61 am Abdampfausgang 51 zusammenwirkt und die diesen bei Aufschwimmen durch Anlage an der Ventilsitzfläche 61 verschließt. Bei normaler, durch den Betrieb der Pumpe 47 gesteuerter Flüssigkeitsmenge im Verdampfergehäuse befindet sich die Schwimmerkugel 59, wie in Fig. 1 gezeigt, im Abstand von der Ventilsitzfläche 61, wobei die Kugel 59 auf Halterippen 63 aufliegt.

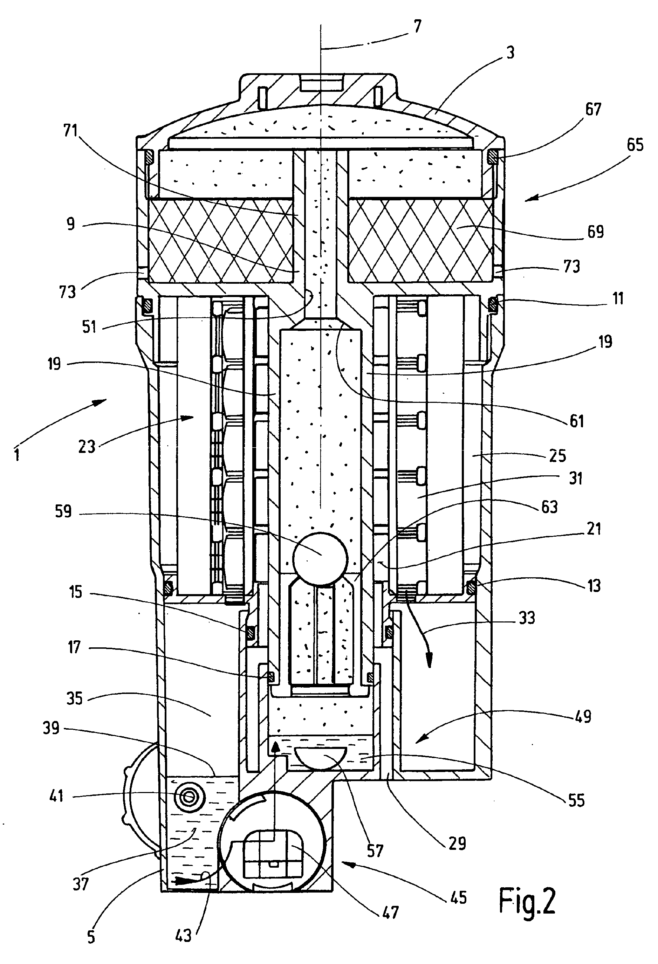

Das in Fig. 2 gezeigte Ausführungsbeispiel unterscheidet vom zuvor beschriebenen Beispiel dadurch, dass sich stromaufwärts des Verdampfergehäuses 19 an dessen Abdampfausgang 51 eine als Ganzes mit 65 bezeichnete Abdampf Filtereinrichtung anschließt. Diese befindet sich im oberen Bereich des Innenkörpers 9, der, mit zwischengefügter Abdichtung 67, mit einem geschlossenen Deckelteil 3, das keinen Abdampfaustritt 53 aufweist, verschlossen ist. Als Filtermedium der Abdampf-Filtereinrichtung 65 ist ein Aktivkohlefilter 69 vorgesehen, das den Endabschnitt 71 des Innenrohres 19 konzentrisch umgibt. Wie in Fig. 2 angedeutet, gelangt der aus dem Endabschnitt 71 austretende Wasserdampf oder -dunst von oben her in das Aktivkohlefilter 69 und verläßt als hochreiner Dunst oder hochreine, kondensierte Flüssigkeit das Gehäuse über Schlitzöffnüngen 73, die in der die Aktivkohle 69 umgebenden Seitenwand ausgebildet sind.

Aufgrund der mittels der Verdampfereinrichtung 49 vorgenommen Vorbehandlung des abgeschiedenen Wassers 55 können außer Aktivkohle 69 auch andere adsorptive Materialien verwendet werden, wobei allerdings bei den meisten Membranen und Molekularsieben, die gelöste Bestandteile trennen können, ein Differenzdruck benötigt wird, der beispielsweise durch eine zusätzliche Pumpe, wie dies bei der oben erwähnten, gattungsfremden bekannten Lösung gemäß EP 1 726 818 A2 der Fall ist, aufgebaut werden kann, oder indem das Wasser in der Verdampfereinrichtung überhitzt wird, um Druck aufzubauen.

## Patentansprüche

1. Kraftstofffiltersystem, insbesondere für Dieselmotoren, mit einem Filtergehäuse (1) mit Kraftstoffeinlass (27) und Kraftstoffauslass (29) und einem zwischen Einlass und Auslass befindlichen, vom Kraftstoff durchströmbaren, wasserabscheidenden Filtermedium (23), wobei das Filtergehäuse (1) für vom Filtermedium abgeschiedenes Wasser einen Sammelraum (35) aufweist, aus dem Wasser über eine steuerbare Abgabeeinrichtung (45) abführbar ist, **dadurch gekennzeichnet, dass** das Wasser über die steuerbare Abgabeeinrichtung (45) einer Wasseraufnahme- und Verdampfereinrichtung (49) zuführbar ist, aus deren Abdampfausgang (51) die Bestandteile des gebildeten Abdampfes an die Umgebung abgebbar sind, und dass die Wasseraufnahme- und Verdampfereinrichtung (49) eine Ventilanordnung (59, 61) aufweist, mittels deren der Abdampfausgang (51) in Abhängigkeit von einer unzulässigen Menge von in der Verdampfereinrichtung (49) angesammelten, unverdampften Wassers (55) verschließbar ist.

2. Kraftstofffiltersystem nach Anspruch 1, **dadurch gekennzeichnet, dass** die Wasseraufnahme- und Verdampfereinrichtung (49) ein über die steuerbare Abgabeeinrichtung (45) mit dem Sammelraum (35) verbindbares Verdampfergehäuse (19) aufweist und dass die Ventilanordnung ein Schwimmerventil (59, 61) aufweist, das in Abhängigkeit von einer unzulässigen Füllhöhe von im Verdampfergehäuse (19) angesammelten Wassers (55) den Abdampfausgang (51) schließt.

3. Kraftstofffiltersystem nach Anspruch 2, **dadurch gekennzeichnet, dass** das Filtergehäuse (1) eine zentrale Hochachse (7) definiert und dass das Verdampfergehäuse (19) durch einen rohrförmigen, zentralen und zur Achse (7) koaxialen Innenkörper (9) des Filtergehäuses(1) gebildet ist.

4. Kraftstofffiltersystem nach Anspruch 3, **dadurch gekennzeichnet, dass** die Außenseite des Innenkörpers (9) an die innere Reinseite (21) des konzentrisch angeordneten Filtermediums (23) angrenzt.

5. Kraftstofffiltersystem nach einem der Ansprüche 1 bis 4, **dadurch gekennzeichnet, dass** der Abdampfausgang (51) stromaufwärts der Abgabeeinrichtung (45) am oberen Ende des das Verdampfergehäuse (19) bildenden Innenkörpers (9) gelegen ist.

6. Kraftstofffiltersystem nach Anspruch 5, **dadurch gekennzeichnet, dass** stromaufwärts des Abdampfausganges (51) des Verdampfergehäuses (19) eine Abdampf-Filtereinrichtung (65) vorgesehen ist.

7. Kraftstofffiltersystem nach Anspruch 6, **dadurch gekennzeichnet, dass** die Abdampf-Filtereinrichtung (65) ein Aktivkohlefilter (69) aufweist.

8. Kraftstofffiltersystem nach einem der Ansprüche 1 bis 7, **dadurch gekennzeichnet, dass** die Abgabeeinrichtung (45) durch eine die Wasser-Füllhöhe im Sammelraum (35) erkennende Wassersensoreinrichtung (41) steuerbar ist.

9. Kraftstofffiltersystem nach Anspruch 8, **dadurch gekennzeichnet, dass** die Abgabeeinrichtung (45) ein von der Wassersensoreinrichtung (41) steuerbares Ablassventil oder von dieser steuerbare Pumpe (47) aufweist.

10. Kraftstofffiltersystem nach einem der Ansprüche 3 bis 9, **dadurch gekennzeichnet, dass** im Verdampfergehäuse (19) eine vorzugsweise steuerbare Einrichtung (57) zur Wärmezufuhr vorhanden ist.

## Claims

1. A fuel filter system, in particular for diesel engines, comprising a filter housing (1) having a fuel inlet (27) and a fuel outlet (29) and a water-separating filter medium (23) through which fuel can flow and which is located between the inlet and the outlet, the filter housing (1) having a collection chamber (35) for water that is separated by the filter medium and from which water can be discharged via a controllable release device (45), **characterised in that** the water can be fed via the controllable release device (45) to a water absorbing and evaporating device (49) from the exhaust vapour outlet (51) of which the components of the exhaust vapour that is formed can be released into the environment, and that the water absorbing and evaporating device (49) has a valve arrangement (59, 61) by means of which the exhaust vapour outlet (51) can be closed dependently upon an inadmissible quantity of unevaporated water (55) that has collected in the evaporator device (49).

2. The fuel filter system according to Claim 1, **characterised in that** the water absorbing and evaporating device (49) has an evaporator housing (19) that can be connected to the collection chamber (35) via the controllable release device (45), and that the valve arrangement has a float valve (59, 61) that closes the exhaust vapour outlet (51) dependently upon an inadmissible fill level of water (55) that has collected in the evaporator housing (19).

3. The fuel filter system according to Claim 2, **characterised in that** the filter housing (1) defines a central vertical axis (7), and that the evaporator housing (19) is formed by a tube-shaped, central inner body (9) of the filter housing (10) coaxial to the axis (7).

4. The fuel filter system according to Claim 3, **characterised in that** the outer side of the inner body (9) abuts the inner clean side (21) of the concentrically arranged filter medium (23).

5. The fuel filter system according to any of Claims 1 to 4, **characterised in that** the exhaust vapour outlet (51) is placed upstream of the release device (45) at the upper end of the inner body (9) forming the evaporator housing (19).

6. The fuel filter system according to Claim 5, **characterised in that** an exhaust vapour filter device (65) is provided upstream of the exhaust vapour outlet (51) of the evaporator housing (19).

7. The fuel filter system according to Claim 6, **characterised in that** the exhaust vapour filter device (65) has an activated carbon filter (69).

8. The fuel filter system according to any of Claims 1 to 7, **characterised in that** the release device (45) can be controlled by a water sensor device (41) that detects the water fill level in the collection chamber (35).

9. The fuel filter system according to Claim 8, **characterised in that** the release device (45) has a release valve that can be controlled by the water sensor device (41) or a pump (47) that can be controlled by the latter.

10. The fuel filter system according to any of Claims 3 to 9, **characterised in that** a preferably controllable device (57) for supplying heat is present in the evaporator housing (19).

## Revendications

1. Système de filtre à carburant, notamment pour des moteurs diesel, comprenant un corps (1) de filtre ayant une entrée (27) pour du carburant et une sortie (29) pour du carburant et un milieu (23) filtrant se trouvant entre l'entrée et la sortie, qui peut être traversé par du carburant et qui sépare de l'eau, le corps (1) du filtre ayant, pour de l'eau séparée par le milieu filtrant, une chambre (35) collectrice de laquelle de l'eau peut être évacuée par un dispositif (45) d'évacuation pouvant être commandé, **caractérisé en ce que** l'eau peut être envoyée par le dispositif (45) d'évacuation pouvant être commandé à un dispositif (49) de réception et d'évaporation d'eau, par la sortie (51) pour la vapeur duquel les constituants de la vapeur formés peuvent être envoyés à l'atmosphère, et **en ce que** le dispositif (49) de réception et d'évaporation d'eau a un dispositif (59, 61) à vanne, au moyen duquel la sortie (51) pour la vapeur peut être fermée en fonction d'une quantité inadmissible d'eau (55) qui n'est pas évaporée et qui est accumulée dans le dispositif (49) d'évaporation.

2. Système de filtre à carburant suivant la revendication 1, **caractérisé en ce que** le dispositif (49) de réception et d'évaporation d'eau comporte une enveloppe (19) d'évaporateur pouvant communiquer avec la chambre (35) collectrice par le dispositif (45) de sortie pouvant être commandé et **en ce que** le dispositif à vanne comporte une vanne (49, 61) à flotteur, qui ferme la sortie (51) pour la vapeur en fonction d'un niveau de remplissage inadmissible d'eau (55) accumulée dans l'enveloppe (19) de l'évaporateur.

3. Système de filtre à carburant suivant la revendication 2, **caractérisé en ce que** le corps (1) du filtre définit un axe (7) vertical central et **en ce que** l'enveloppe (19) de l'évaporateur est formée par une pièce (9) du corps (1) du filtre intérieure, tubulaire, centrale et coaxiale à l'axe (7).

4. Système de filtre à carburant suivant la revendication 3, **caractérisé en ce que** la face extérieure de la pièce (9) intérieure est voisine de la face (21) intérieure propre du milieu (23) filtrant disposé concentriquement.

5. Système de filtre à carburant suivant l'une des revendications 1 à 4, **caractérisé en ce que** la sortie (51) pour la vapeur est disposée en amont du dispositif (45) de sortie à l'extrémité supérieure de la pièce (9) intérieure formant l'enveloppe (19) de l'évaporateur.

6. Système de filtre à carburant suivant la revendication 5, **caractérisé en ce qu'**il est prévu un dispositif (65) de filtration de la vapeur en amont de la sortie (51) de la vapeur de l'enveloppe (19) de l'évaporateur.

7. Système de filtre à carburant suivant la revendication 6, **caractérisé en ce que** le dispositif (65) de filtration de la vapeur comporte un filtre (69) à charbon actif.

8. Système de filtre à carburant suivant l'une des revendications 1 à 7, **caractérisé en ce que** le dispositif (45) de sortie peut être commandé par un dispositif (41) de capteur d'eau, détectant le niveau de remplissage dans la chambre (35) collectrice.

9. Système de filtre à carburant suivant la revendication 8, **caractérisé en ce que** le dispositif (45) de sortie comporte une vanne de sortie pouvant être commandée par le dispositif (41) de capteur d'eau ou par une pompe (47) pouvant être commandée par celui-ci.

10. Système de filtre à carburant suivant l'une des revendications 3 à 9, **caractérisé en ce qu'**un dispositif (57), pouvant être de préférence commandé, pour l'apport de chaleur, est présent dans l'enveloppe (19) de l'évaporateur.
